# EUROPEAN PATENT SPECIFICATION

(11) **EP 0 711 012 B1**
(45) Date of publication and mention of the grant of the patent: **19.04.2000**
(21) Application number: 95908947.5
(22) Date of filing: 24.02.1995
(51) Int. Cl.: H01T 4/06

(54) **IMPROVED MODULE FOR THE CONNECTION AND TESTING OF TELEPHONE LINES**
VERBESSERTER MODUL ZUR VERBINDUNG UND PRÜFUNG VON FERNSPRECHLEITUNGEN
MODULE AMELIORE POUR EFFECTUER, CONNETER ET TESTER DES LIGNES TELEPHONIQUES

(30) Priority: 25.02.1994 ES 9400528 U
(43) Date of publication of application: 08.05.1996
(73) Proprietor: MONDRAGON TELECOMMUNICATIONS, S.L., 46550 Albuixech (Valancia) (ES)
(72) Inventor: MONDRAGON SORRIBES, Ramún Direcciún profesional, Mediterraneo E-46550 Albuixech (ES)
(74) Representative: Jay, Anthony William
(86) International application number: ES9500025
(87) International publication number: WO9523447

(56) References cited:
- EP-A- 0 498 151
- FR-A- 2 409 616
- GB-A- 2 048 580
- US-A- 4 424 546

## Description

### SPECIFICATION

### OBJECT OF THE INVENTION

The object of the present invention is a module for connecting, protecting and testing parameters in telephone lines.

Given the nature and application of the module, it must be appropriate to effectively and simply perform several functional tasks, of which the following are essential:
a) - Connection between the multi-pair cables of the general network and the drop wires conductors serving the various subscribers that are connected from the terminal chamber where the modules are housed.
b) - Breaking network/ ubscriber electrical continuity optionally and temporarily, for testing purposes, without working with the permanent module connections.
c) - Checking technical characteristics of the connection by means of an easy accessibility to the appropriate contacts.
d) - Protection against contingent irregularities in current constants, in particular voltage surges.

### BACKGROUND OF THE INVENTION

US-A-4 159 500 discloses an elongated line protector has a series of base modules for plug-in reception of a series of arrester modules, carbon or gas tube type as may be selected. Along opposed sides of the base modules are recesses for slide-on attachment of terminal modules each having a row of terminals, such as binding posts, connector clips, etc. for connections to telephone lines to be protected. Several groups of terminal modules may be assembled with each other side-by-side on each of the opposed base module sides depending upon the number of groups and styles of terminals desired. Correct electrical connections between the terminals and the arresters are established through the protector upon assembly by conductors including ground and line busses.

The firm that holds a Utility Model also holds Model no. 92.00258 registered and in force for a "Device for checking electric continuity in low-tension lines", its Specification noting that its preferred application is in telecommunications lines.

The said Model noted the advantages afforded by such device over other connecting and testing modules known when it was registered, and found in the prior art of the time.

For its part, the module subject of the present Utility Model provides numerous advantageous differences in respect of the device of U.M. 92.00258 which is deemed most representative of prior art at the time of filing this Model for registration.

For instance, the arrangement of the terminals in U.M. 92.00258 provides only three accessible points, two of which are the drop wires/pairs coupled terminals and the third being the earth connection terminal. The module subject of this invention, however, offers five accessible points, namely the two drop wires terminals, the two pairs terminals and the earth terminal, since electric continuity between the first terminals is established two by two by jumpers existing in the removable protection module.

The difference aforesaid provides the new module with greater operative and functional versatility for, by allowing accessories to be coupled in series or in parallel between the accessible ends of the drop wires and pairs terminals, control functions can be optionally performed on various parameters such as:
a) - Frequency: Coupling of frequency filter coils in series successfully limits the frequency band that can be used in the channel to prevent an abusive use of the network.
b) - Intensity By coupling variable resistors in series with impedance increasing with temperature (PCT = Positive Temperature Coefficient) the line is protected against current overloads.
c) - Voltage: By coupling an ionizable noble gas discharger located in the protection module in parallel, the connection is earthed in the event of there being surges in the network in excess of a preset limit value.
d) - Continuity: By coupling appropriate elements an echo can be obtained in response to a given frequency signal emitted from the Exchange, to check electric continuity in the line, between the latter and the connection module, without having to send out members of staff to make site checks.

Furthermore, whereas U.M. 92.00258 provides pairs connection by lowering the rotary pairs holder by hand, the new module provides for this to take place by lowering the same using a tool (screw-driver, box spanner) to drive a screw, the end of which projects from the underside of the module and applies pressure against the earth terminal tab, thereby to ensure a better contact with the supporting bar, and for the module to be held still to prevent contingent longitudinal movements.

Inversely, the breaking function that was performed in U.M. 92.00258 by lifting a screw with a suitable tool, is performed in the new module by manually removing the protection module which is internally fitted with jumpers or continuity terminals connecting together the drop wires and the pairs terminals.

### DESCRIPTION OF THE INVENTION

A module for connecting and testing telephone lines, according to the present invention, is defined in claim 1.

The module constituting the subject of the invention provides the advantageous technical and functional characteristics listed above in comparison with other devices known in the state of the art, with the means and arrangements described below.

The module has a substantially symmetrical structure in respect of a central and transversal plane. Thus, on either side of this plane the bodies of the drop wires and pairs conductors holders are located with their respective lifting and lowering screws with the continuity breaking and protection module lying in a central position and being removable by hand.

The connections are made through the lowering of the conductors holders, by forcing these to go through a slot with sharp edges located at the top end of the respective terminal to remove the insulation material and house the conductors in contact with said terminal.

After making connections between the conductors and respective terminals, the continuity of the network-subscriber line can be established if the protection module is lying inserted in its service position, as the module is fitted with continuity terminals, which form a contact jumper between the drop wires terminals and the pairs terminals for this reason the breaking function is performed by manually removing the protection module from its seat, thus breaking the continuity of the line and making the drop wires and pairs terminals accessible, these protruding in order to facilitate carrying our tests or mounting complementary accessories.

The voltage surge protection function is performed by an ionizable noble gas discharger, an item already known of in this use, but whose new and original form of connections is made by means of a protection terminal which encircles this and electrical connects it to the earth terminal by means of a plug to facilitate removal of the central module, in which the discharger and protection terminal are housed.

The accessibility of all the terminals (drop wires, pairs, earth) when the protection and continuity module is removed must be compatible with the hermetic sealing of the module seat to prevent any reduction of the insulation between terminals through the penetration of damp and oxidation of the contacts, which would give rise to an increase in the connection's electrical resistance, this being a problem which could understandably arise through fitting the terminal chamber outdoors.

To avoid this, two arrangements are provided, firstly, the protection module's seat is embedded in a maze fashioned in the bottom of the central body, into which it fits tightly, and also by fitting an "O" ring seal into the sliding contour of the protection module.

It must be pointed out that the breaking module does not have to be removed in order to perform tests, since the continuity jumpers are accessible to the terminals of a tester through hollow turrets set for this purpose in the cover of the continuity and breaking module.

The connection modules are arranged in the normal way at the bottom of the terminal chamber set adjacently in line, in two parallel and inversely symmetric series, manually inserted in a metal connection strip which, apart from performing the support function acts as an earth connection. In the module covered in the invention, the connection strip is a metal bar with a standard omega section, that is, one of standard commercial size.

In order to prevent any possible sliding of the modules along the connection strip, since they are only joined to this by an anchoring pawl with an opposing spring, the end of the screw for moving the pairs conductors holder protrudes through the underside of the module an presses against the earth terminal tab, in turn making the latter press against the wing or flange of the supporting metal bar with omega section, so that it provides firmer securing and improves de electrical earthing contact.

### BRIEF DESCRIPTION OF THE DRAWINGS

In order to complete the description of the invention and contribute to the understanding of its structural and functional characteristics, drawings are attached which schematically show various features of the "Module for connecting and testing telephone lines" subject of the Invention.

In said drawings:

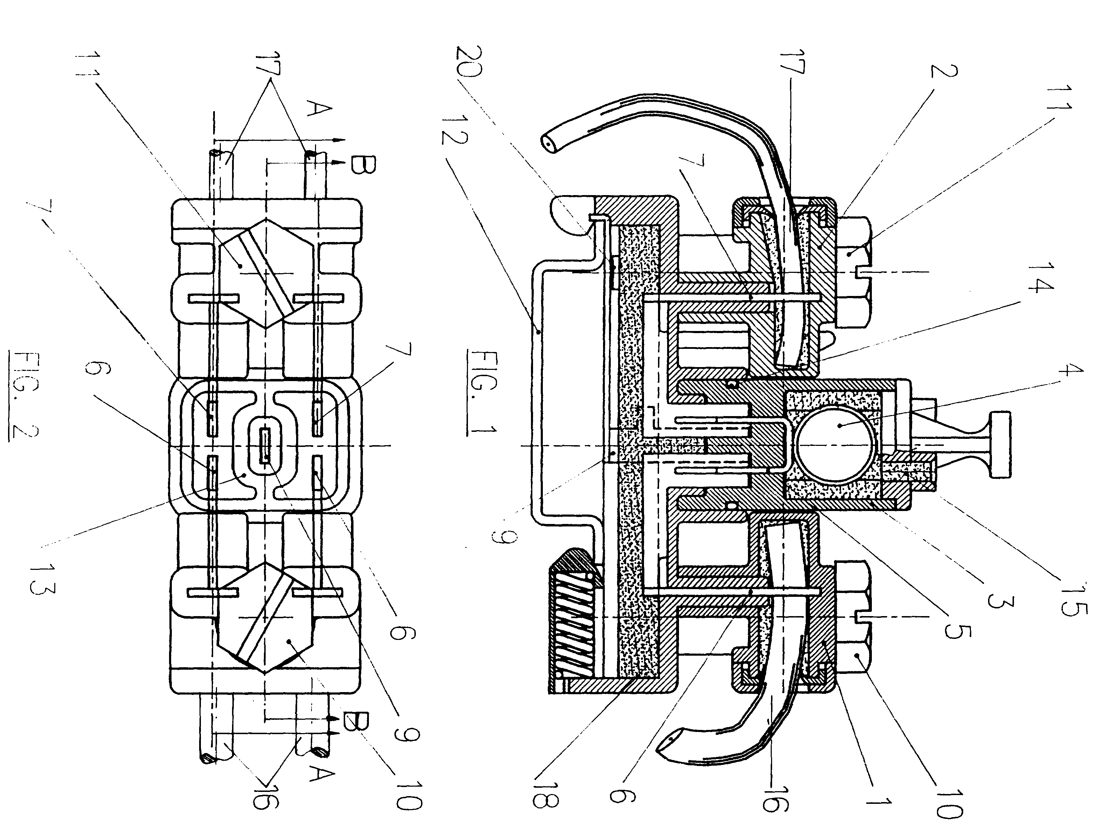

- Figure 1 is an elevation section of the module, wherein the drop wires and pairs conductors are connected to their respective terminals (with the conductors holders in their lower position) and continuity jumpers are established (with the module inserted) and the gas discharger is connected to the earth terminal (protection function).

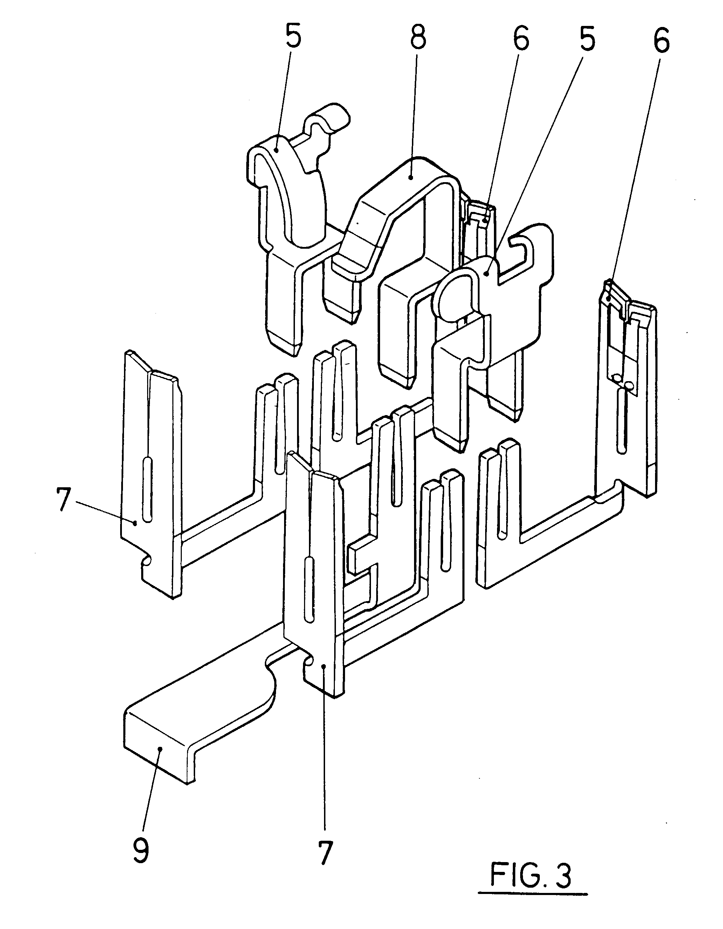

- Figure 2 is a plan view of the module marking the plane A-A' along which the cross-section of Figure 1 is obtained. The plan view has the continuity and breaking module removed to show the arrangement of the ends of the drop wires and pairs terminals, between which the continuity jumpers are established, as well as the end of the earth terminal to which the gas discharger is connected (voltage surge protection function).
- Figure 3 is a perspective view of the relative arrangement of the various terminals, showing: the two drop wires terminals and the two pairs terminals, all having an identical conformation and arranged in opposite pairs; the earth terminal, between the two pairs terminals; the continuity terminals or jumpers, connecting between them the ends of the drop wires and pairs terminals and housed in the breaking module; and the protection terminal which encircles the gas discharger and plugs into the end of the earth terminal end.

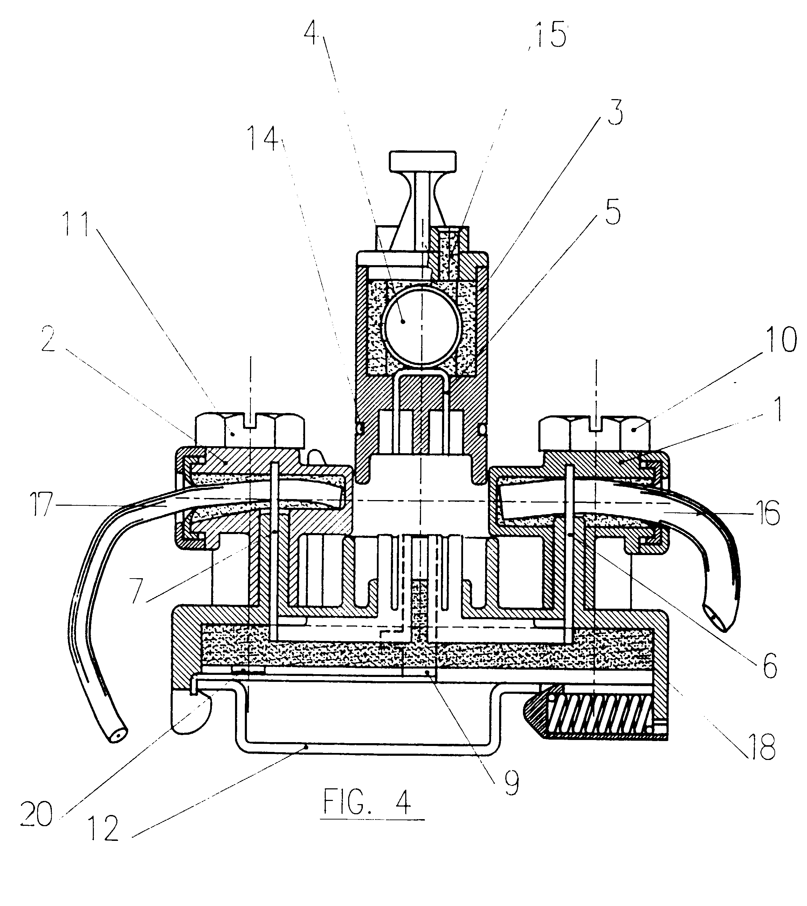

- Figure 4 is an elevation section along the same plane A-A' of Figure 2 showing the performance of breaking function by removing the continuity module.

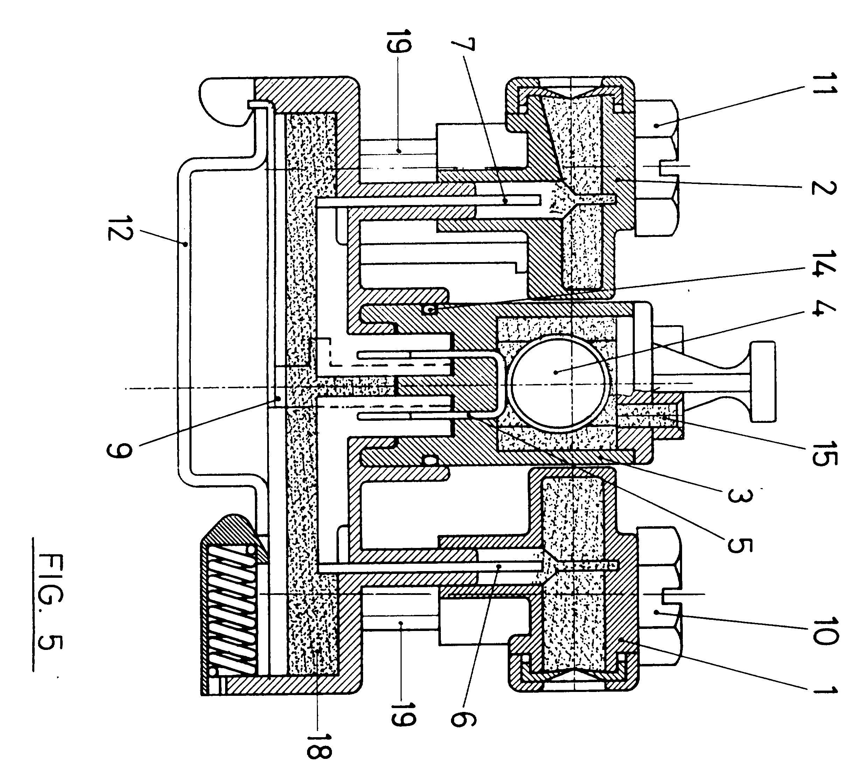

- Figure 5 is another section showing the disconnection function, with the conductor holders raised and therefore without the pairs and drop wires conductors inserted in their respective terminals. The downward movement of the conductors holders makes the connections, as is shown in figure 1.

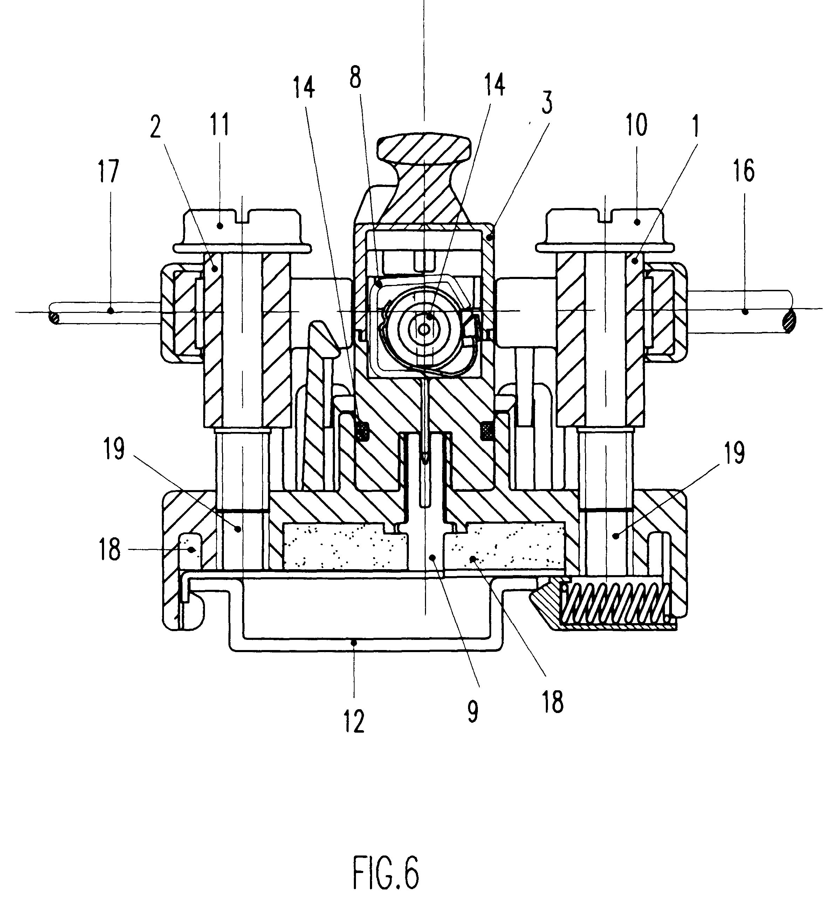

- Figure 6 is a section view of the module, cutaway along a vertical B-B plane which goes through the longitudinal axis and whose path is shown in figure 2.

### DESCRIPTION OF THE PREFERRED EMBODIMENT

In order to clearly display the nature and advantageous application of the "Module for connecting and testing telephone lines" which is the subject of this invention, its structure and operation will now be described with reference to the drawings which, through representing a preferential embodiment of the same, for information purposes, should be taken in their broadest sense and not as restricting the scope of the invention.

The connection function between the pairs conductors (17) and the drop wires conductors (16) is performed in the following way: the screw (10) goes centrally through the drop wires conductors holder (1) via a non-threaded hole (Fig. 6) and enters a female thread (19) fixed to the body of the module, so that, when threaded on, this forces the conductors (16) and the contact terminal (6) (Fig. 4) and reciprocally, when unthreaded, lifts the conductors holder (1) and breaks the connection (Fig. 5).

Screw (11) performs the same task with the pairs conductors holder (2) in respect of the connection of the pairs conductors (17) with the contact terminal (7).

The function for breaking electrical continuity between the main distribution line and the subscriber or user's installation is performed by manually removing the central, continuity or breaking module (3) which contains the continuity jumpers (5) that interconnect the drop wires terminals (6) with the pair terminal (7 (Fig. 3) when the breaking module (3) is inserted; and breaks the electrical continuity between both terminal (6,7) when this module is removed, leaving the ends of said terminals (6,7) exposed and accessible for tests and measurements of the different technical parameters of the line to be made.

The protection function is carried out by means of an ionizable noble gas discharger (4) encircled by the protection terminal (8), both of these (discharger and terminal) being contained in the central module (3), so that when said module (3) is inserted the protection terminal (8) plugs into the earth terminal (9) (Fig. 3), which occupies a central position and is immobilised by partial immersion in a layer of insulating material (18).

The screw (11) which governs the movements of the pairs conductors holder (2) is longer than screw (10), so that its longer end (20) (Figs 1 and 4) presses the earth terminal (9) against the wing or flange of the metal bar (12) with omega shaped section which holds the modules at the bottom of the general connection box in which these are housed, improving the earthing contact through said bar (12) and the attachment of the modules to the same bar (12) in which the are inserted

In order to assure the hermetic sealing of the continuity, breaking and protection module (3) in its seat, and to maintain the insulation between terminals, a maze (13) (Fig. 2) is provided, fashioned in the bottom of the central body, into which a projection of the same shape located at the bottom of said module (3) fits tightly, with an 'O' ring (14) (Figs 1, 4 and 5) being inserted into its sliding contour.

The checks made on the line can be carried out without removing the breaking module (3) since the continuity jumpers (5) are accessible to the terminals of a tester through hollow turrets (15) set in the cover of said continuity and breaking module (3).

## Claims

1. A module for connecting and testing telephone lines, to be housed in a terminal chamber, the module comprises:
a connection module having a first screw (10) which goes centrally through a first conductor holder (1) via a first non threaded hole and enters a first female thread (19) fixed to a body of the connection module, so that when threaded on, the first conductor holder (1) is forced to go down and makes a first connection through displacement of the insulation between the drop wire conductors (16) and drop wire terminals (6) and reciprocally, when unthreaded, lifts the first conductor holder (1) and breaks the first connection;
a second screw (11) which goes centrally through a second conductor holder (2) via a second non threaded hole and enters a second female thread (19) fixed to the body of the connection module, so that when threaded on, the second conductor holder (2) is forced to go down and makes a second connection through displacement of the insulation between the pair of conductors (17) and conductor contact terminals (7) and reciprocally, when unthreaded, lifts the second conductor holder (2) and breaks the second connection;
a hand removable central module (3) which contains continuity jumpers (5) for interconnecting the drop wire contact terminals (6) with the conductor contact terminals (7) when the central module is inserted in the connection module,
an ionizable noble gas discharger (4) encircled by a protection terminal (8) both the discharger (4) and the protection terminal (8) being contained in the central module (3), so that when the central module (3) is inserted in the connection module the protection terminal (8) plugs into an earth terminal (9), the earth terminal (9) occupies a bottom central position of the connection module and the earth terminal is immobilised by partial immersion in a layer of insulating material (18); the second screw (11) is longer than the first screw (10), so that its longer end (20) can press the earth terminal (9) against a wing of an omega shaped metal bar (12) which can hold support the module at the bottom of the terminal chamber.

2. A module for connecting and testing telephone lines, according to claim 1, wherein, in order to assure the hermetic sealing of the central module (3) in its seat, and to maintain the insulation between the terminals (6,7) a maze (13) is provided, fashioned in the bottom of the connection module, into which a projection of the same shape as the maze located at the bottom of said centrale module (3) fits tightly, with an 'O' ring (14) being inserted into a sliding contour of the maze.

3. A module for connecting and testing telephone lines, according to preceding claims, wherein the checks made on the line can be carried out without removing the central module (3) since the continuity jumpers (5) are accessible to the terminals of a tester through hollow turrets (15) set in the cover of said central module (3).

## Patentansprüche

1. Modul zum Verbinden und Prüfen von Fernsprechleitungen, das in einer Abschlußkammer aufzunehmen ist, wobei das Modul folgendes aufweist:
ein Verbindungsmodul, das eine erste Schraube (10) hat, die durch ein erstes gewindeloses Loch zentral durch einen ersten Leiterhalter (1) geht und in ein erstes Innengewinde (19), das an einem Körper des Verbindungsmoduls befestigt ist, eintritt, so daß der erste Leiterhalter (1) beim Anschrauben nach unten gezwungen wird und eine erste Verbindung durch Verdrängung der Isolierung zwischen den Einführungsdrahtleitern (16) und den Einführungsdrahtanschlußelementen (6) herstellt und umgekehrt den ersten Leiterhalter (1) beim Lösen der Verschraubung hebt und die erste Verbindung unterbricht;
eine zweite Schraube (11), die durch ein zweites gewindeloses Loch zentral durch einen zweiten Leiterhalter (2) geht und in ein zweites Innengewinde (19), das an dem Körper des Verbindungsmoduls befestigt ist, eintritt, so daß der zweite Leiterhalter (2) beim Anschrauben nach unten gezwungen wird und durch Verdrängung der Isolierung zwischen dem Paar von Leitern (17) und Leiterkontaktanschlußelementen (7) eine zweite Verbindung herstellt und umgekehrt den zweiten Leiterhalter (2) beim Lösen der Verschraubung hebt und die zweite Verbindung unterbricht;
ein von Hand abnehmbares zentrales Modul (3), das Verbindungsbrücken (5) enthält, um die Einführungsdrahtkontaktanschlußelemente (6) mit den Leiterkontaktanschlußelementen (7) zu verbinden, wenn das zentrale Modul in das Verbindungsmodul eingeführt wird,
eine Entladungseinrichtung (4) für ionisierbares Edelgas, die von einem Schutzanschlußelement (8) umschlossen ist, wobei sowohl die Entladungseinrichtung (4) als auch das Schutzanschlußelement (8) in dem zentralen Modul (3) enthalten sind, so daß dann, wenn das zentrale Modul (3) in das Verbindungsmodul eingeführt wird, das Schutzanschlußelement (8) in ein Erdanschlußelement (9) eingesteckt wird, wobei das Erdanschlußelement (9) eine untere zentrale Position des Verbindungsmoduls einnimmt und das Erdanschlußelement durch teilweises Versenken in einer Schicht (18) aus Isoliermaterial unbeweglich ist; die zweite Schraube (11) länger als die erste Schraube (10) ist, so daß ihr längeres Ende (20) das Erdanschlußelement (9) gegen einen Flügel einer omegaförmigen Metallstange (12) drücken kann, die das Modul am Boden der Abschlußkammer abstützen kann.

2. Modul zum Verbinden und Prüfen von Fernsprechleitungen nach Anspruch 1, wobei zum Gewährleisten der hermetischen Abdichtung des zentralen Moduls (3) in seinem Sitz und zum Aufrechterhalten der Isolierung zwischen den Anschlußelementen (6, 7) ein in dem Boden des Verbindungsmoduls ausgebildetes Labyrinth (13) vorgesehen ist, in das ein Vorsprung der gleichen Gestalt wie das Labyrinth, das an dem Boden des zentralen Moduls (3) angeordnet ist, fest paßt, wobei ein 'O'-Dichtring (14) in eine Gleitkontour des Labyrinths eingesetzt ist.

3. Modul zum Verbinden und Prüfen von Fernsprechleitungen nach den vorhergehenden Ansprüchen, wobei die Prüfungen, die an der Leitung vorgenommen werden, ohne Abnehmen des zentralen Moduls (3) durchgeführt werden können, da die Verbindungsbrücken (5) für die Anschlußelemente eines Prüfgeräts durch hohle Türme (15), die in der Abdeckung des zentralen Moduls (3) angeordnet sind, zugänglich sind.

## Revendications

1. Module destiné à connecter et à tester des lignes téléphoniques, à loger dans une chambre de bornes, le module comprenant :
un module de connexion comportant une première vis (10) qui traverse centralement un premier dispositif (1) de maintien de conducteurs via un premier trou non taraudé et pénètre un premier trou taraudé (19) fixé à un corps du module de connexion de sorte que, lorsqu'elle est vissée, le premier dispositif (1) de maintien de conducteurs est poussé pour s'abaisser et établit une première connexion par le dénudage de l'isolant entre les conducteurs (16) de fils d'abonné et les bornes (6) de fils d'abonné, et réciproquement, lorsqu'elle est dévissée, élève le premier dispositif (1) de maintien de conducteurs et rompt la première connexion ;
une second vis (11) qui traverse au centre un second dispositif (2) de maintien de conducteurs via un second trou non taraudé et pénètre un second trou taraudé (19) fixé au corps du module de connexion, de sorte que, lorsqu'elle est vissée, le second dispositif (2) de maintien de conducteurs est poussé pour s'abaisser et établit une seconde connexion par le dénudage de l'isolant entre la paire de conducteurs (17) et les bornes (7) de contact de conducteurs, et réciproquement, lorsqu'elle est dévissée, élève le second dispositif (2) de maintien de conducteurs et rompt la seconde connexion ;
un module central (3) pouvant être retiré à la main qui contient des cavaliers (5) de continuité destinés à interconnecter les bornes (6) de contact de fils d'abonné avec les bornes (7) de contact de conducteurs lorsque le module central est introduit dans le module de connexion, un dispositif (4) de décharge de gaz noble ionisable encerclé par une borne (8) de protection, le dispositif (4) de décharge et la borne (8) de protection étant tous les deux contenus dans le module central (3), de sorte que, lorsque l'on introduit le module central (3) dans le module de connexion, la borne (8) de protection s'enfiche dans une borne (9) de terre, la borne (9) de terre occupe une position centrale inférieure du module de connexion et la borne de terre est immobilisée par immersion partielle dans une couche de matière isolante (18) ; la seconde vis (11) est plus longue que la vis (10), de sorte que son extrémité plus longue (20) peut appuyer la borne (9) de terre contre une aile d'une barre métallique en forme d'oméga (12) qui maintient, en le supportant, le module au niveau de la partie inférieure de la chambre de bornes.

2. Module destiné à connecter et à tester des lignes téléphoniques selon la revendication 1, dans lequel afin de garantir le scellement hermétique du module central (3) dans son appui, et pour maintenir l'isolement entre les bornes (6, 7), un labyrinthe (13) est prévu, usiné dans la partie inférieure du module de connexion dans lequel une saillie de la même forme que le labyrinthe située au niveau de la partie inférieure dudit module central (3) s'ajuste étroitement, un joint torique (14) étant introduit dans un contour glissant du labyrinthe.

3. Module destiné à connecter et à tester des lignes téléphoniques selon les revendications précédentes, caractérisé en ce que les vérifications effectuées sur la ligne peuvent être exécutées sans retirer le module central (3) de rupture puisque les cavaliers (5) de continuité sont accessibles aux bornes d'un appareil de contrôle par l'intermédiaire de tourelles creuses (15) placées dans l'élément de recouvrement dudit module central (3).
